Europäisches Patentamt

**(19)** European Patent Office

Office européen des brevets

**(11)** Publication number : **0 315 593 B1**

## **(12)** EUROPEAN PATENT SPECIFICATION

**(45)** Date of publication of patent specification :
**20.05.92 Bulletin 92/21**

**(51)** Int. Cl.⁵ : **A23L 1/36,** A21D 13/08, A23L 1/105

**(21)** Application number : **88830431.8**

**(22)** Date of filing : **25.10.88**

**(54)** Decorative food composition with a dried-fruit-paste base, particularly for sweet products.

**(30)** Priority : **02.11.87 IT 6792087**

**(43)** Date of publication of application :
**10.05.89 Bulletin 89/19**

**(45)** Publication of the grant of the patent :
**20.05.92 Bulletin 92/21**

**(84)** Designated Contracting States :
**AT BE CH DE ES FR GB GR IT LI LU NL SE**

**(56)** References cited :
EP-A- 0 149 258
CH-A- 551 157
GB-A- 139 670
**PATENT ABSTRACTS OF JAPAN**, vol. 9, no. 96
(C-278)[1819], 25th April 1985; & JP-A-59 227
246 (MORINAGA SEIKA K.K.)20-12-1984

**(73)** Proprietor : **Ferrero S.p.A.**
**Piazzale Pietro Ferrero 1**
**I-12051 Alba (Cuneo) (IT)**

**(72)** Inventor : **Ferrero, Pietro**
**Avenue Lequim 62,**
**1640 Rhode St. Genèse Bruxelles (BE)**

**(74)** Representative : **Jacobacci, Filippo et al**
**c/o JACOBACCI-CASETTA & PERANI S.n.c.**
**Via Alfieri, 17**
**I-10121 Torino (IT)**

## Description

The present invention relates to a decorative food composition with a dried-fruit-paste base, particularly for decorating sweet products.

More particularly, the invention concerns a food composition intended to be packaged in a dispensing container of the type described in Italian utility model application no. 53568-B/86, which is formed by two flexible sheets with respective peripheral edges connected together so as to form a shaped compressible bladder having at least one delivery duct which, following tearing of its end portion, defines a nozzle for the supply of the composition by pressure exerted on the bladder.

Dispensing containers of the type mentioned above are normally included in a sealed package including a sweet product intended to be decorated by the consumer before consumption. The problem is then posed of providing a decorative composition which, as well as having excellent organoleptic characteristics, has physical properties such as to allow the consumer to achieve a regular, easily-controllable supply of the composition over a wide temperature range so as to allow metering and possibly forming of decorations on the product to be decorated. More particularly, it is desirable for the composition to be suitable for extrusion with a piston flow through the nozzle and for the extruded flow to have a consistency such that it can keep its shape both at refrigeration temperature and at room temperature.

Moreover, in view of the high vegetable fat content of fresh fruit paste, which typically has values of from 45 to 70% by weight, a further problem lies in the provision of a decorative composition which has a long lifetime, at least one month, under refrigerated conditions, typically from 4 to 8°C, and which does not display separation of the oily phase or synaeresis.

In order to resolve the problems explained above, a subject of the present invention is a decorative food composition with a dried-fruit-paste base, characterised in that it includes tapioca starch, possibly modified in concentrations of from 2 to 5% by weight, so as to stabilise the composition against synaeresis and to give it a pasty consistency suitable for extrusion over a temperature range from ambient temperature to 4°C.

By the term "pasty consistency" is meant a consistency such that the extruded flow is able to maintain its own shape. The term "suitable for extrusion" is intended to indicate a product whose consistency is such as to enable extrusion by dispensing devices of the type described in the utility model application mentioned above with a substantially piston flow.

The products N-OIL consisting of natural tapioca starch or the product N-ZORBIT consisting of expanded tapioca dextrin, both prepared by National Starch & Chemical, may be used as the tapioca starch. The dried fruit paste used may, for example, be peanut, almond or hazelnut paste. The use of toasted hazelnut paste, ground to a fineness of less than 30 microns is preferred.

In order to sweeten the composition, it is particularly preferred to use microcrystalline fructose ground to less than 30 microns, in concentrations of from 2 to 30% by weight.

The composition according to the invention will be further described by means of the example which follows.

Example

A decorative composition is prepared by the intimate mixing of toasted hazelnut paste ground to a fineness of less than 30 microns with a vegetable fat content of about 65%, microcrystalline fructose in particles of less than 30 microns, and natural tapioca starch in the form of a dried powder constituted by the commercial product N-ZORBIT.

The components are mixed with the following concentrations by weight:

```
hazelnut paste                          77.8%
fructose                                20.2%
modified tapioca starch (N-ZORBIT)       2  %
```

The viscosity of the paste obtained is measured with a Brookfield viscosimeter with a No. 4 body at velocity 2.5, at a temperature of 20°C, and at a temperature of 8°C, and gives the following values:
viscosity at 20°C          57,440 cP
viscosity at 8°C           68,800 cP

The composition obtained was packaged in a dispensing container of the type described in utility model application no. 53568-B/86, having a useful internal volume of about 30cc and provided with three delivery ducts with circular orifices of 4mm diameter.

The dispensing container including the composition cooled to a temperature of 4°C in a domestic refrigerator was used immediately after being taken from the refrigerator to garnish and decorate a sponge cake. The decorating operation, carried out by compressing the bladder of the container, was easy and gave rise to the extrusion of substantially equal cylindrical threads from the three nozzles of the container, the threads having a pasty consistency which kept their cylindrical form at an ambient temperature of 20°C.

Similar results were obtained from a decoration with the use of a container including the composition kept at the ambient temperature of 20°C.

After it had been kept for a month under refrigerated conditions at 4°C, an analysis of the organoleptic properties of the composition showed the absence of separation of the oily phase.

By way of a control, a decorative composition was prepared essentially with the following composition:

hazelnut paste    79.4 by weight
fructose    20.6 by weight

The composition thus obtained, when subjected to a viscosity determination under the conditions mentioned above, gave the following values:

viscosity at 20°C:    38,000 cP
viscosity at 8°C:    47,040 cP

The data given above shows the considerable increase in viscosity obtainable with the use of the starch and the lesser dependency of the viscosity on the variation in temperature.

Corresponding decorating tests carried out with the use of the control composition packaged in a dispensing container under the conditions mentioned with reference to the product of the invention did not not enable a control flow to be obtained at 20°C such as to allow uniform metering. The extruded flow deposited on the food product did not keep its shape. Moreover, the analasyis of the organoleptic properties of the product kept under refrigerated conditions at 4°C for one month showed obvious separation of the oily phase. The composition according to the invention may also preferably include cocoa in quantities approximately sufficient to give the desired taste. The preferred composition is constituted by:

fructose    20% by weight
paste    77%
cocoa    1%
N-ZORBIT    2%

## Claims

1. A decorative food composition with a dried-fruitpaste base, characterised in that it includes tapioca starch, possibly modified, in concentrations of from 2 to 5% by weight, so as to stabilize the composition against synaeresis and to give it a pasty consistency suitable for extrusion over a temperature range from ambient temperature to 4°C.

2. A composition according to Claim 1 characterised in that the modified starch is constituted by expanded tapioca dextrin.

3. A food composition according to Claims 1 or 2, characterised in that the dried fruit paste is selected from the group consisting of peanut, almond and hazelnut paste having a vegetable fat content of between 45 and 70%.

4. A food composition according to Claims 1 or 2 characterised in that it includes in the region of 2 to 30% by weight of fructose as a sweetener.

## Patentansprüche

1. Dekorative Nahrungsmittelzubereitung auf Basis einer getrockneten Fruchtpaste, dadurch gekennzeichnet, daß die Zubereitung eventuell modifizierte Maniokstärke in Konzentrationen von 2 bis 5 Gewichtsprozent aufweist, um die Zubereitung gegen eine Synärese zu stabilisieren und ihr eine pastenartige Konsistenz zu verleihen, die für ein Spritzen über einen Temperaturbereich von der Umgebungstemperatur bis 4°C geeignet ist.

2. Zubereitung gemäß Anspruch 1, dadurch gekennzeichnet, daß die modifizierte Stärke von expandiertem Maniokdextrin gebildet wird.

3. Nahrungsmittelzubereitung gemäß Anspruch 1 oder 2, dadurch gekennzeichnet, daß die getrocknete Fruchtpaste aus einer Gruppe gewählt wird, die Erdnuß-, Mandel- und Haselnußpaste enthält, die einen Pflanzenfettgehalt zwischen 45 und 70% besitzen.

EP 0 315 593 B1

4. Nahrungsmittelzubereitung gemäß Anspruch 1 oder 2, dadurch gekennzeichnet, daß die Zubereitung Fruchtzucker als Süßstoff im Bereich von 2 bis 30 Gewichtsprozent aufweist.

**Revendications**

1. Composition alimentaire décorative à base de pâte de fruits sèche, caractérisée en ce qu'elle contient de l'amidon de tapioca, éventuellement modifié, à une concentration de 2 à 5 % en poids, de façon à stabiliser la composition vis-à-vis d'une synérèse et lui conférer une consistance pâteuse, appropriée à être extrudée dans la plage de température allant de la température ambiante à 4°C.

2. Composition selon la revendication 1, caractérisée en ce que l'amidon modifié est constitué de dextrine de tapioca expansée.

3. Composition alimentaire selon la revendication 1 ou 2, caractérisée en ce que l'on choisit la pâte de fruits sèche dans le groupe formé de la pâte de cacahuètes, la pâte d'amandes et la pâte de noisettes, ayant une teneur en graisses végétales comprise entre 45 et 70 %.

4. Composition alimentaire selon la revendication 1 ou 2, caractérisée en ce qu'elle contient environ 2 à 30 % en poids de fructose, comme édulcorant.

4